Europäisches Patentamt

**European Patent Office**

Office européen des brevets

(19)

(11) Veröffentlichungsnummer: **0 102 530**
**B1**

(12) **EUROPÄISCHE PATENTSCHRIFT**

(45) Veröffentlichungstag der Patentschrift:
**22.04.87**

(51) Int. Cl.⁴: **A 01 F 15/00**

(21) Anmeldenummer: **83107682.3**

(22) Anmeldetag: **04.08.83**

(54) **Verfahren zum Beseitigen von Überlastungen von Erntegutklumpen oder dgl. bei einer Anordnung zum Herstellen von zylindrischen Ballen aus Erntegut.**

---

(30) Priorität: **06.08.82 US 405966**

(43) Veröffentlichungstag der Anmeldung:
**14.03.84 Patentblatt 84/11**

(45) Bekanntmachung des Hinweises auf die Patenterteilung:
**22.04.87 Patentblatt 87/17**

(84) Benannte Vertragsstaaten:
**DE FR GB IT**

(56) Entgegenhaltungen:
**EP - A - 0 076 502**
**US - A - 3 722 197**

(73) Patentinhaber: **DEERE & COMPANY, 1 John Deere Road, Moline Illinois 61265 (US)**

(72) Erfinder: **Anstey, Henry Dennis, Route 4 Box 188A, Ottumwa Iowa 52501 (US)**
Erfinder: **Meiers, Gerald Franklyn, 1014 Chester, Ottumwa Iowa 52501 (US)**
Erfinder: **Koning, Richard William, 411 Elmdale, Ottumwa Iowa 52501 (US)**

(74) Vertreter: **Fricke, Joachim, Dr. et al, Dr. R. Döring, Dr. J. Fricke, Patentanwälte Josephspitalstrasse 7, D-8000 München 2 (DE)**

---

ACTORUM AG

## Beschreibung

Die Erfindung betrifft ein Verfahren zum Beseitigen von Überlastungen durch Erntegutklumpen oder dgl. an Ballenpressen für zylindrische Ballen, die eine sich mit zunehmender Ballendicke selbsttätig erweiternde Ballenformkammer aufweisen, welche durch mehrere parallele, angetriebene, endlose und über Rollen geführte Riemen begrenzt ist, bei dem bei Auftreten einer Überlastung der Riemenantrieb vorübergehend stillgesetzt wird.

Derartige Ballenpressen, auf die sich das Verfahren nach der Erfindung beziehen, sind allgemein bekannt. Es ist bei diesen auch üblich, bei Auftreten einer Überlastung den Riementrieb vorübergehend stillzusetzen. So kommt beispielsweise bei Auftreten einer Überlastung ein Überlastungsschutz in Form einer Schlupfkupplung im Hauptantriebsweg zur Wirkung (vgl. US-PS 4 252 057). Ein solcher Überlastungsschutz ist jedoch lediglich ein Mittel, um Teile des Antriebes oder der Maschine vor den Folgen einer Überlastung zu schützen. Ein solcher Überlastungsschutz ist weder geeignet eine Überlastung von vorne herein auszuschliessen oder bei Auftreten einer Überlastung diese zu beseitigen. Hierzu sind besondere Massnahmen notwendig.

Eine Überlastung bei Ballenpressen der in Frage stehenden Art kann beispielsweise dann auftreten, wenn übermässig grosse Klumpen an Erntegut durch den Guteintritt der Ballenformkammer zugeführt werden. Diese Gefahr tritt besonders häufig auf, wenn die Ballenpresse nahe ihrer maximalen Leistung betrieben wird. Um die Ballenformkammer einer solchen Ballenpresse von den aufgetretenen Verstopfungen zu befreien sind verschiedene Möglichkeiten bekannt, wobei dies nach den Angaben in der genannten US-PS 4 252 057 eine schwierige und zeitaufwendige Arbeit ist. Zur Beseitigung der Verstopfung kann in einem Fall der Antrieb für die Riemen abgeschaltet werden, worauf mit Hilfe eines Kurbeltriebes eine der die Riemen tragenden Rollen, zumeist die Antriebsrolle im umgekehrten Drehsinne gedreht wird. Die Riemen werden damit in einem Sinne angetrieben, der der Antriebsrichtung beim Formen eines zylindrischen Ballens entgegengesetzt ist. Dadurch wird versucht, die Gutanhäufung oder den Gutklumpen in der Ballenformkammer freizubekommen. Der Klumpen kann dann mittels Hand entfernt werden. Dieses Verfahren ist zeitaufwendig und mühselig, da es mittels Hand durchgeführt werden muss, und erfordert zudem einen hohen Kraftaufwand. Dieser kann auch durch einen zusätzlichen mechanischen Antrieb der Ballenpresse für die Umkehrung der Antriebsrichtung der Riemen aufgebracht werden. Eine andere Möglichkeit zur Beseitigung einer Verstopfung besteht darin, den erst teilweise fertigen zylindrischen Ballen aus der Ballenformkammer auszuwerfen, worauf man das in der Ballenformkammer festhängende Material mittels Hand entfernt. Ein wesentlicher Nachteil dieser Möglichkeit besteht darin, dass ein noch nicht fertig gewickelter ungebundener zylindrische Ballen abgeworfen wird. Dieser muss dann mittels Hand nachgebunden werden, damit er transportiert werden kann.

Das Ziel des Gegenstandes der US-PS 4 252 057 ist es das Auftreten von Überlastungen durch Gutklumpen und Hängenbleiben der Riemen und das Ansprechen des Überlastungsschutzes in Form einer Schlupfkupplung möglichst zu vermeiden. Zu diesem Zweck sind die eine Vergrösserung der Ballenformkammer ermöglichenden beweglich angeordneten Rollen für die Riemen so angeordnet und ausgebildet, dass sich die Ballenformkammer bei Auftreten eines Gutklumpens momentan vom Guteintritt weg verlagern kann unter gleichzeitiger Straffung der Riemen, um so jedes Hängenbleiben der Riemen zu vermeiden und die Reibung zwischen Riemen und Ballen zu dessem Rotationsantrieb zu vergrössern. Diese Massnahme, mit der ein Hängenbleiben der Riemen und damit eine Überlastung des Riementriebes vermieden werden soll, bedarf einen erheblichen zusätzlichen konstruktiven Aufwand. Sie ist auch nicht in jedem Falle wirksam, d.h., dass diese Massnahmen nicht in allen Fällen bei Eintritt eines Gutklumpens die überlastungsfreie Verarbeitung dieses Gutklumpens sicherstellen kann. Wenn dies aber nicht sofort bei Auftreten eines solchen Klumpens gelingt, beginnen die Riemen dennoch zu rutschen und die Überlastungskupplung anzusprechen, so dass der Überlastungs- und Verstopfungszustand eintritt, der vermieden werden soll und der nur durch eine schwierige und zeitaufwendige Arbeit wieder beseitigt werden kann.

Die vorliegende Erfindung verzichtet auf das Bemühen, das Auftreten von Verstopfungen und Überlastungen von vorne herein zu vermeiden. Es ist vielmehr Aufgabe der Erfindung das eingangs näher bezeichnete Verfahren so weiterzubilden, dass ohne schwierige und zeitaufwendige Arbeit auftretende Verstopfungen an solchen Ballenpressen auf einfache Weise und zuverlässig und rasch beseitigt werden können.

Diese Aufgabe wird gelöst durch die im kennzeichnenden Teil des Anspruchs 1 enthaltenen Merkmale.

Bei dieser wird unabhängig von der als Überlastungsschutz dienenden Schlupfkupplung im Hauptantriebsweg zunächst der Riemenantrieb direkt stillgesetzt. Nachfolgend wird nicht wie im bekannten Fall die Ballenformkammer lediglich gegenüber dem Guteintritt verlagert, sondern der Durchmesser der Ballenformkammer wird bewusst und unter Verwendung eines ohnehin vorhandenen Kraftantriebes gegenüber der augenblicklichen Grösse des zylindrischen Ballens erweitert. Damit wird Raum geschaffen für den Gutklumpen, der dadurch aus der Verklemmung freikommt. Danach werden die Riemen um das insgesamt in der Ballenformkammer befindliche Erntegut, also um den bereits teilweise geformten zylindrischen Ballen und um den Gutklumpen erneut gestrafft und der normale Betrieb anschliessend wieder aufgenommen. Dieses Verfahren lässt sich schnell und leicht und ohne zusätzliche, also nicht ohnehin vorhandene Antriebseinrichtungen, durchführen. Eine Handarbeit ist dabei nicht erforderlich. Das Verfahren kann unter Ausnützung der ohnehin vorhandenen Einrichtungen und Vorrichtungen der Ballenpresse ausgeführt werden. Es lässt sich daher auch auf einfache und billige Weise vorrichtungsmässig realisieren.

Wenn von einer Ballenpresse ausgegangen wird, bei der die die Ballenformkammer begrenzenden Riemenabschnitte auf Seiten des Guteintrittes durch zwei untere gestellfeste Rollen und oberhalb des Ballens durch zwei gemeinsam an in Abhängigkeit von der Zunahme des Ballenquerschnittes verschwenkbaren Tragarmen gelagerten Rollen geführt sind, wird das Verfahren zweckmässigerweise nach der Lehre des Anspruchs 2 weitergebildet. Hierbei können die bei diesen Ballenpressen ohnehin vorhandenen Tragarme und die diesen zugeordneten Einrichtungen für das Ausführen des Verfahrens vorteilhaft ausgenutzt werden, wobei diese Einrichtungen normalerweise dazu dienen, eine dem Wachsen des Ballens entsprechende Vergrösserung der Ballenformkammer unter Ausübung einer gewünschten Vorspannung auf den Ballen zu ermöglichen.

Die Erfindung wird nachfolgend anhand schematischer Zeichnungen an einem Ausführungsbeispiel näher erläutert. Es zeigen:

Fig. 1 eine Seitenansicht einer Ballenpresse zum Herstellen von zylindrischen Ballen und zum Ausführen des Verfahrens nach der Erfindung.

Fig. 2 in Seitenansicht eine mehr schematische Darstellung, wobei die naheliegende Seitenwand der Ballenpresse entfernt worden ist, um die inneren Komponenten wiederzugeben, während gleichzeitig einige der wesentlichen Elemente an der Aussenseite gestrichelt dargestellt sind.

Fig. 3 in ähnlicher Darstellung wie Fig. 2 eine andere Phase bei der Bildung eines Ballens.

Fig. 4 in ähnlicher Darstellung wie Fig. 2 und 3 eine weitere fortgeschrittene Arbeitsphase.

Fig. 5 eine ähnliche Darstellung wie Fig. 2 bis 4, in der das Auswerfen des fertiggestellten Ballens aus der Ballenformkammer gezeigt ist und

Fig. 6 eine schematische Ansicht einer bevorzugten Ausführungsform des hydraulischen Steuerkreises, der zur Steuerung der Dichte, des Auswerfens des Ballens und der Beseitigung von Verstopfungen dient.

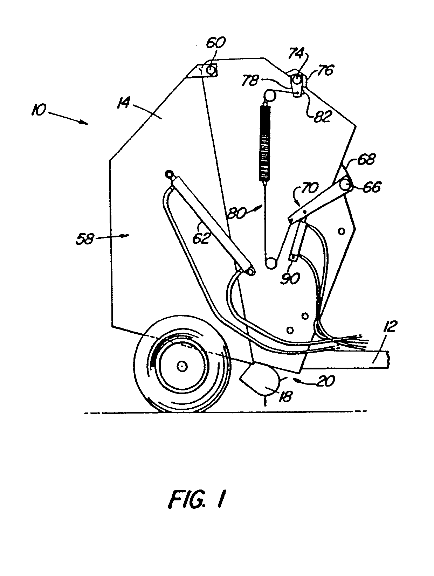

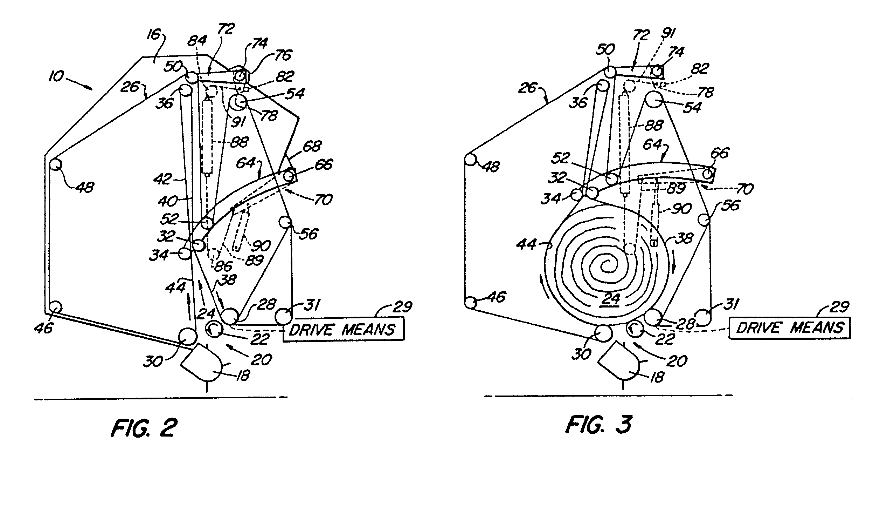

Fig. 1 zeigt eine bevorzugte Ausführungsform einer Ballenpresse zum Durchführen des Verfahrens nach der Erfindung. Die Ballenpresse 10 umfasst einen Hauptrahmen mit einer Zugstange 12 zur Verbindung mit einem Ackerschlepper (nicht gezeigt), über den sie über ein Feld mit zuvor geerntetem Erntegut gefahren wird. Der Hauptrahmen weist senkrechte Seitenwände 14 auf. Ein üblicher Erntegutaufnehmer 18 führt das auf dem Boden liegende Erntegut nach oben in den Ernteguteintritt 20 und durch diesen in eine Ballenformkammer 24, die einen mit wachsendem Durchmesser des Ballens zunehmenden inneren Durchmesser aufweist. Eine Querrolle 22 im Guteintritt dient zur Unterstützung eines Ballenkernes, wie dies die Figuren 2 bis 4 zeigen. Die Ballenformkammer 24 wird durch einen Satz von quer verlaufenden Tragrollen und einem Satz von endlosen Riemen 26 gebildet, die über die Rollen geführt sind. Die Riemen 26 werden durch einen üblichen Antrieb 29 angetrieben, der an die Zapfwelle des Ackerschleppers angeschlossen und mit der unteren vorderen Rolle 28 verbunden ist. Der Riemenantrieb 29 umfasst eine zur Sicherheit dienende Reibungskupplung, welche ausrückt, wenn die zum Antrieb der Riemen 26 erforderliche Kraft zu gross wird. Eine übermässige Kraft kann auftreten, wenn die Wickelkammer 24 mit einem grossen Klumpen von Heu verstopft wird, wie dies weiter unten im einzelnen beschrieben wird. Der Satz an Rollen umfasst eine untere vordere Rolle 28, eine untere rückwärtige Rolle 30, eine demgegenüber versetzt angeordnete Rolle 31, eine dazwischenliegende vordere Rolle 32 und eine mittlere rückwärtige Rolle 34 sowie eine obere Rolle 36. Ein Riementrum 38 erstreckt sich von der Rolle 28 zu der Rolle 32 und setzt sich bei 40 zur oberen Rolle 36 fort. Der Riemen kehrt dann nach unten bei 42 zu einem Strang 44, der zu der unteren rückwärtigen Rolle 30 führt. Es ist folglich ersichtlich, dass die Stränge 38 und 34 die ursprüngliche Ballenformkammer 24 begrenzen, deren Durchmesser zunimmt, wenn das Erntegut in einen Ballen von fortlaufend zunehmender Grösse gewickelt wird, und zwar bis eine vorbestimmte Grösse erreicht ist.

Der Riemen 26 erstreckt sich von der unteren rückwärtigen Rolle 30 nach rückwärts zu einer rückwärtigen unteren Rolle 46, führt von dort nach oben zu einer Rolle 48 und weiter nach oben und nach vorne zu einer Rolle 50 und von dieser zu einer dritten Zwischenrolle 52. Von dieser ist der Riemen zurück zu einer hoch oben liegenden Rolle 54 und von dieser zu einer vorderen Rolle 56 geführt und läuft dann zurück zu der unteren vorderen Rolle 28. Die Rollen 30, 46 und 48 und ein Abschnitt des Riemenstranges 44 werden durch einen torartigen Abschnitt 58 unterstützt, welcher im wesentlichen den rückwärtigen Teil des Hauptrahmens der Maschine bildet und der nahe der Oberseite an den Seitenwänden durch Schwenkeinrichtungen 60 schwenkbar gelagert ist. Der Torabschnitt 58 wird zurück und nach vorne bewegt zwischen einer geschlossenen Stellung für die Ballenbildung in der Ballenformkammer 24 und einer offenen Stellung für das Auswerfen des Ballens durch hydraulische Zylinder 62 (von denen nur einer in Fig. 1 gezeigt ist und die auf jeder Seite der Maschine angeordnet sind und hydraulisch mit dem hydraulischen System verbunden sind, das zu dem ziehenden Ackerschlepper gehört).

Die drei Rollen 32, 34 und 52 sind auf Tragarmen 64 gelagert, die von vorne nach rückwärts ragen und jeweils unmittelbar innerhalb jeder Seitenwand angeordnet und gemeinsam auf einer Querwelle 66 befestigt sind, die von den Seitenwänden 14 bei 68 schwenkbar getragen wird.

Eine Hebelarmanordnung 70 ist an jedem Ende der Querwelle 66 gerade ausserhalb jeder Seitenwand befestigt und erstreckt sich nach oben, wobei Fig. 2 nur einen Arm zeigt. Die obere Rolle 50 ist auf einer Montageeinrichtung gelagert, welche zwei innenliegende Hebelarme 72 umfasst, die an einer oberen Schwenkwelle 74 befestigt sind, welche nahe den entgegengesetzten Enden der Hauptrahmenseitenwand bei 76 gelagert ist. An dieser Seite der Ballenpresse sind äussere Hebelarmabschnitte 78 vorgesehen, die an dem näherliegenden Ende der Schwenkwelle unmittelbar ausserhalb der zugehörigen Seitenwände befestigt sind. Jeweils eine aus Kette und Kettenrädern bestehende Anordnung 80 ist auf jeder Seite der Maschine zwischen dem Hebelarm 78 und der Hebelarmanordnung 70 befestigt. Für jeden Hebelarm 78 ist ein Anschlag 82 vorgesehen. Ein flexibles Spannglied 80 umfasst im dargestellten Beispiel ein oberes Kettenrad 84, ein unteres Kettenrad 86, eine schraubenförmige Spannfeder 88, eine obere Kette 91, die mit dem Hebelarm 78 verbunden und über das obere Kettenrad gelegt ist und dann mit dem oberen Ende der Feder 88 verbunden ist, sowie eine untere Kette 89, die mit dem unteren Ende der Feder verbunden und über das untere Kettenrad 86 gelegt ist und schliesslich zu dem freien Ende der Hebelarmanordnung führt. Die aus Kette und Kettenrad bestehende Anordnung 80 bildet einen Teil einer Steuereinrichtung zum Kontrollieren der Stellung der Rollen 32, 34 und 52, wenn der Ballen in seiner Grösse zunimmt. Der Abstand zwischen den Rollen 32 und 34 ist klein genug, um zu verhindern, dass der Ballen nach oben ausweichen kann. Das bedeutet, dass die Rollen 32 und 34 zusammen mit den zugehörigen Strängen der Riemen dazu dienen, den oberen Teil des Ballens zu begrenzen und gemeinsam nach oben auszuweichen, um der fortschreitenden Zunahme des Ballens Rechnung zu tragen.

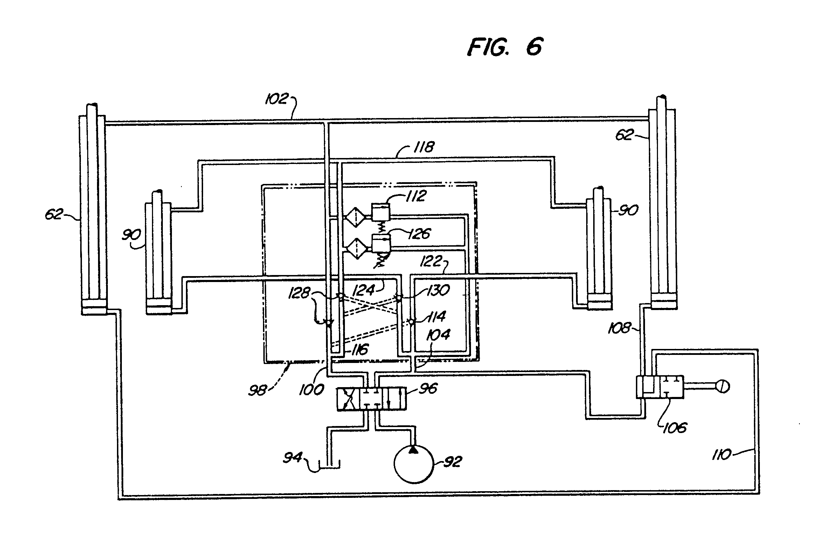

Ein weiterer Teil der Kontrolleinrichtung umfasst auf jeder Seite der Maschine einen hydraulischen Zylinder 90, der an einen hydraulischen Steuerkreis, z.B. des Ackerschleppers, angeschlossen ist. Der Steuerkreis wird nachfolgend in Verbindung mit Fig. 6 beschrieben, soweit er im vorliegenden Zusammenhang von Interesse ist.

Der hydraulische Steuerkreis umfasst eine Pumpe 92, einen Sumpf 94 und ein Hauptsteuerventil 96. Wie aus Fig. 6 hervorgeht, sind die Zylinder 62 und 90 im dargestellten Beispiel parallel geschaltet, und zwar vermittels einer dazwischenliegenden Ventilsteuereinrichtung 98. Eine Betätigung der Zylinder 62 zum Verschwenken der Toreinrichtung wird als erstes betrachtet. Eine Leitung 100 führt von dem Hauptsteuerventil 96 über die Leitungszweige 102 zu den oberen Enden der Zylinder 62. Durch Unterdrucksetzen dieser Leitungen werden die Zylinder 62 eingefahren. Eine weitere Leitung führt von dem Hauptsteuerventil 96 über das Abschaltventil 106, das in Fig. 6 in seiner Offenstellung gezeigt ist, sowie über die Leitungszweige 108 und 110 zu den unteren Enden der Zylinder 62. Wenn das Abschaltventil 106 geschlossen ist, bleiben die Zylinder 62 in ihrem jeweiligen Zustand, können also nicht ausfahren und nicht einfahren. Ein Druckentlastungsventil 112 ist an die Leitung 100 angeschlossen um zu verhindern, dass Beschädigungen der Maschine auftreten, wenn bei geöffnetem Tor das Tor an einen festen Gegenstand, z.B. den ausgeworfenen Ballen trifft und daher im Anschluss an den Auswurf eines fertigen Ballens nicht vollständig geschlossen werden kann.

Die Betätigung der Steuerzylinder 90 erfolgt in der nachfolgend beschriebenen Weise. Eine Leitung 116 zweigt von der Leitung 100 ab und führt über Zweigleitungen 118 zu den oberen Enden der Zylinder 90, während die Leitung 104 über die Zweigleitungen 122 und 124 zu den unteren Enden der Zylinder 90 führt. Eine einstellbare Entlastungsventileinrichtung 126, die in Fig. 6 in der Schliessstellung gezeigt ist, verbindet über Kreuz die Leitungen 116 und 104. Die Leitungen 100, 116 umfassen jeweils Rückschlagventile 128, um einen Rückfluss durch das Hauptsteuerventil 96 auszuschliessen, wobei die gestrichelten Linien in der Figur die Vorsteuerwirkung des Rückschlagventils 128 veranschaulichen. Vorgesteuerte Rückschlagventile 114 bzw. 130 dienen jeweils dazu, ein Einfahren der Zylinder 90 zu verhindern, ausser wenn die Pumpe 92 arbeitet und das Hauptsteuerventil 96 betätigt wird. Dieses System liefert eine getrennte Leitung und ein getrenntes Rückschlagventil für jeden Zylinder, was bedeutet, dass wenigstens zwei Komponenten des Systems ausfallen müssen, bevor die beiden hydraulischen Zylinder zufällig einfahren können.

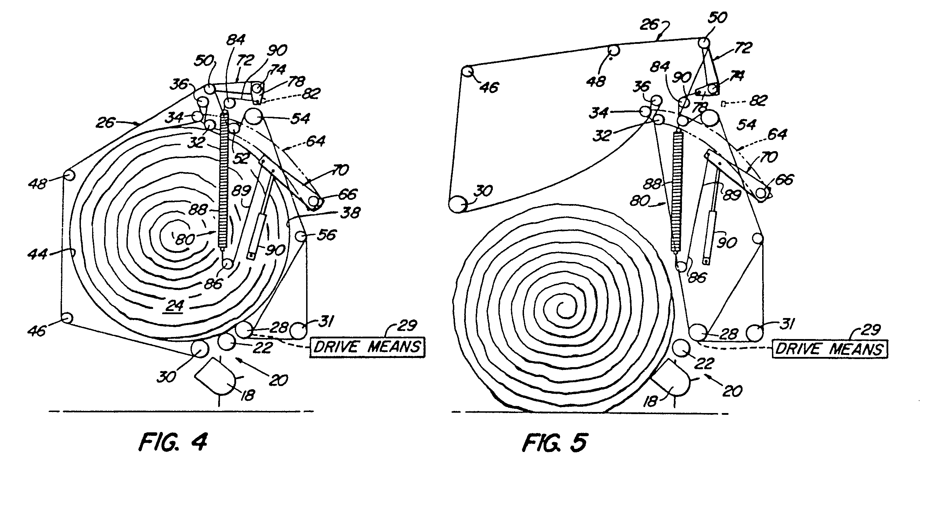

Das auf dem Boden liegende Erntegut wird durch den Aufsammler 18 aufgenommen und dem Guteintritt zugeführt. Die Riemenstränge 38 und 40 laufen in entgegengesetzten Richtungen, wie die Pfeile zeigen. Je mehr Erntegut der Ballenformkammer 24 zugeführt wird, umso mehr nimmt der im Aufrollzustand befindliche Ballen an Durchmesser zu (Fig. 3 und 4). Dabei bewegen sich die Rollen 32, 34 und 53 nach oben, wobei die Tragarme 64 sich unter der Steuerung des aus Kabeln, Rädern und Federn bestehenden Systems und der hydraulischen Zylinder 90 nach oben bewegt. Die Ballendichte kann verändert werden, indem man den Vordruck in den Zylindern 90 ändert.

Die Rollen 32 und 34 bleiben während des ganzen Ballenbildungsvorganges stets oberhalb des Ballens. Hierbei bleibt die Toreinrichtung 58 unbeweglich und damit auch die Lage der von dem Torteil getragenen Rollen. Die Rollen 32 und 34 dienen nur dazu, den Ballen völlig eingeschlossen zu halten. Obwohl diese Rollen immer näher dem Umfang des Ballens rücken, wenn dieser wächst, können sie keine nennenswerte, nach unten gerichtete Kraft auf den Ballen ausüben. Dies geht deshalb nicht, weil die Hubkraft, die durch den oberen Hebelarm 72 auf die Tragrolle 52 wirkt, dies verhindert.

Eine weitere Funktion der Rolle besteht darin, eine Kompensation im Falle hoher Spitzenleistungen zu ermöglichen. Je näher die Tragarme 64 dem Ballenumfang liegen, umso mehr Kraft ist erforderlich, den Ballen in der Ballenformkammer zu rollen. Wenn ein solcher Zustand auftritt, üben die sich ergebenden Riemenkräfte unter der zunehmenden Antriebsspannung eine nach oben gerichtete Kraft auf die Rollen 32 und 34 aus, um die Tragarme nach oben zu heben. Wenn der Ballen ausgeworfen wird, wirken die Zylinder 90 auch dahingehend, die Tragarme in der angehobenen Stellung zu halten. Hierbei wird eine Lose in den Riemen erzeugt, welche wünschenswert ist, um die Anordnung zu warten und zu verhindern, dass sich Material an unerwünschten Stellen anhäuft.

Die Vorteile der hydraulischen Steuereinrichtung, welche die Zylinder 90 und die dafür vorgesehenen Ventile umfassen, bestehen darin, dass die Zylinder einen gesteuerten Widerstand gegenüber der nach oben gerichteten Bewegung der Tragarme 64 liefern, und zwar in einer effektiveren Weise als dies mit Federn allein möglich ist. Ausserdem wird eine konstante Riemenspannung aufrechterhalten und so eine gleichförmigere Dichte der Ballen gewährleistet. Der Widerstand, der in dem Zylindersystem auftritt, wenn das hydraulische Mittel zwischen den oberen und unteren Enden der Zylinder über das einstellbare Entlastungsventil 126 ausgetauscht werden, dient zur Erzeugung der gewünschten Spannung. Während normaler Ballenbildung ist die Ballengeometrie derart, dass die Riemen durch die Rollen 32, 34 und 52 bei der zutreffenden Geschwindigkeit entlastet werden, so dass die Rolle 50 in Anlage an dem Anschlag 82 nach Fig. 1 verbleibt. Die Feder 88 liefert eine zunehmende Kraft auf die Rolle 50 wenn die Ballengrösse zunimmt, um eine ausreichende Riemenspannung auf den rücklaufenden Trumen aufrecht zu erhalten und so Riemenschlupf zu verhindern. Dies ist wichtig, da dann, wenn ein unregelmässiger oder schlecht gewickelter Ballen mit den Rollen 32 und 34 in Kontakt kommt, die Rolle 50 die gesamte Rücklaufspannung liefern muss, die zum Antrieb der Riemen notwendig ist. Wenn der Ballen fertig ist und ausgeworfen werden soll, werden beide Zylinderpaare 62 und 90 ausgefahren.

Es wurde festgestellt, dass bei Einsatz von Ballenpressen der in Frage stehenden Art unter bestimmten Erntebedingungen grössere Klumpen an Erntegut in den Guteintritt der Ballenformkammer gelangen. Wenn die Maschine bei nahezu ihrer maximalen Ballengeschwindigkeit betrieben wird, kann es gelegentlich vorkommen, dass die Ballenformkammer verstopft wird. Ein Verstopfen der Ballenformkammer überlastet den Riemenantrieb 29. Dies führt dazu, dass die Sicherheitsreibungskupplung ausrückt oder schlupft.

Um die Verstopfung zu beseitigen wird zunächst der Antrieb für die Riemen 26 stillgelegt.

Dies kann beispielsweise auf einfache Weise dadurch geschehen, dass man den Zapfwellenantrieb ausrückt. Danach werden die Tragarme 64 von dem Ballen weg nach oben bewegt, um die Querschnittsfläche der Ballenformkammer 24 zu vergrössern. Gleichzeitig mit der Bewegung der Tragarme 64 nach oben werden die Hebelarme 72 und die daran unterstützte Rolle 50 um die Schwenkwelle 74 im Uhrzeigersinne verschwenkt, und zwar über die flexible Spanneinrichtung (Feder 88 und zugehörige Ketten), welche zwischen den Tragarmen 64 und dem Hebelarm 78 eingeschaltet ist. Die nach oben gerichtete Bewegung der Rolle 50 vergrössert die Spannung an den Riemen 26. Diese können also nicht nur so gesteuert werden, dass sich die Wickelkammer 24 vergrössert, sondern auch so, dass dies gleichzeitig sicherstellt, dass die Riemen 26 ausreichend gespannt werden, um durch den Riemenantrieb 29 angetrieben zu werden. Die Tragarme 64 werden durch Verstellen des Hauptsteuerventils 96 nach oben bewegt, um die Pumpe 92 mit dem unteren Ende der Hydraulikzylinder 90 zu verbinden und diese auszufahren. In Verbindung mit dem bevorzugten Ausführungsbeispiel des hydraulischen Kreises nach Fig. 6 führt die Betätigung des Hauptsteuerventils 96 zum Ausfahren der Zylinder 90 und normalerweise auch zum Ausfahren der den Torteil betätigenden Zylinder 62, mit der Folge eines Auswerfens eines Ballens aus der Ballenformkammer 24. Um dies zu vermeiden, wird das Abschaltventil 106 geschlossen, bevor das Ventil 96 betätigt wird, um so eine Betätigung der den Torteil betätigenden Zylinder 62 gleichzeitig mit dem Ausfahren der Zylinder 90 zu verhindern. Auf die Bewegung der Tragarme 64 nach oben und die Spannung der Riemen 26 durch die Bewegung der Hebelarme 72 im Uhrzeigersinne wird der Riemenantrieb 29 erneut eingeschaltet. Mit der verminderten Last auf dem Riemenantrieb 29 greift nunmehr die Reibungskupplung zuverlässig ein und die Riemen können erneut angetrieben werden. Der Verstopfungspfropfen im Guteintritt 20 wird so in die Ballenformkammer 24 eingeführt und um den Ballen gewickelt mit der Folge, dass die Ballenformkammer 24 nicht mehr blockiert ist. Danach kann der Ballenformvorgang in üblicher Weise fortgesetzt werden. Zu diesem Zweck wird das Hauptsteuerventil 96 zurück in die zentrale geschlossene Stellung bewegt, während das Abschaltventil 106 in die offene Stellung gebracht wird.

Das Freisetzen der Ballenformkammer ist somit einfach und wirksam und kann ohne Notwendigkeit spezieller zusätzlicher Einrichtungen zur Umkehr des Antriebes der Riemen 26 verwirklicht werden. Es ist auch keine anstrengende manuelle Arbeit erforderlich, da das Beseitigen einer Verstopfung einfach durch Schliessen des Abschaltventils 106 erreicht werden kann, um ein Auswerfen des Ballens zu verhindern, sowie durch Betätigung des hydraulischen Hauptsteuerventils 96, das in dieser Arbeitsphase die Grösse oder den Durchmesser der Ballenformkammer 24 im Verhältnis zu dem Ballen steuert.

Für den Fachmann ist auch ersichtlich, dass man die das Torteil betätigenden Zylinder 62 auch unabhängig von dem Hauptsteuerventil 96 bzw. unabhängig von den Zylindern 90 für den Tragteil steuern kann.

Die oben verwendeten Ausdrücke «obere», «untere» und dgl. sind lediglich zum besseren Verständnis und nicht zur Begrenzung der Erfindung verwendet.

## Patentansprüche

1. Verfahren zum Beseitigen von Überlastungen durch Erntegutklumpen oder dergleichen an Ballenpressen (10) für zylindrische Ballen, die eine sich mit zunehmender Ballendicke selbsttätig erweiternde Ballenformkammer (24) aufweisen, die durch mehrere parallele, angetriebene, endlose und über Rollen (28, 30 usw.) geführte Riemen (26) begrenzt ist, bei dem bei Auftreten einer Überlastung der Riemenantrieb (29) vorübergehend stillgesetzt wird, dadurch gekennzeichnet, dass nach dem Stillsetzen des Riementriebes (29) zunächst eine oder mehrere der Tragrollen (32, 34) für die Riemen (26) mittels Kraftantrieb (90) unter Vergrösserung des Durchmessers der Ballenformkammer (24) gegenüber der gerade vorliegenden Querschnittsgrösse des in der Entwicklung befindlichen Ballens nach aussen bewegt werden, worauf die Riemen (26) um den Ballenumfang gestrafft werden und der Riemenantrieb (29) darauf erneut in Gang gesetzt wird.

2. Verfahren nach Anspruch 1 für Ballenpressen, bei denen die die Ballenformkammer (24) begrenzenden Riemenabschnitte auf Seiten des Guteintrittes (20) durch zwei untere gestellfeste Rollen (28, 30) und oberhalb des Ballens durch zwei gemeinsam an in Abhängigkeit von der Zunahme des Ballenquerschnittes verschwenkbaren Tragarmen (64) gelagerte Rollen (32, 34) geführt sind, dadurch gekennzeichnet, dass nach dem Stillsetzen des Riemenantriebes (29) die Tragarme (64) und die an diesen oberhalb des Ballens gelagerten Rollen (32, 34) mit Hilfe des Kraftantriebes (90) vom Umfang des Ballens weg nach aussen bewegt werden und dass gleichzeitig mit der Vergrösserung des Abstandes zwischen diesen oberen Rollen (32, 34) und dem Umfang des Ballens die Riemen (26) zwangsläufig um den Ballenumfang ständig gestrafft werden, und dass nach Erreichen des gewünschten vergrösserten Abstandes zwischen den oberen Rollen (32, 34) und dem Umfang des Ballens der Riemenantrieb (29) wieder eingeschaltet wird.

## Claims

1. A method of eliminating overloadings due to lumps of crop material or the like in balers (10) for round bales, which have a baling chamber (24) which automatically expands with increasing bale thickness and which is defined by a plurality of parallel driven endless belts (26) which are guided over rollers (28, 30 etc.), wherein when an overloading occurs the belt drive (29) is temporarily stopped, characterised in that, after stoppage of the belt drive (29), firstly one or more of the support rollers (32, 34) for the belts (26) are moved outwardly by means of a power drive (90), thereby increasing the diameter of the baling chamber (24) relative to the cross-sectional size at that time of the bale in the course of being formed, whereupon the belts (26) are tightened around the bale periphery and the belt drive (29) is thereupon set in operation again.

2. A method according to claim 1 for balers in which the belt portions defining the baling chamber (24) are guided at the side of the material intake (20) by two lower rollers (28, 30) which are fixed with respect to the frame structure and above the bale by two rollers (32, 34) which are mounted jointly on support arms (64) which are pivotable in dependence on the increase in the size of the bale cross-section, characterised in that after stoppage of the belt drive (29), the support arms (64) and the rollers (32, 34) which are mounted thereon above the bale are moved outwardly away from the periphery of the bale by means of the power drive (90) and that at the same time as the increase in the spacing between said upper rollers (32, 34) and the periphery of the bale, the belts (26) are positively tightened continuously around the periphery of the bale and that after the desired increased spacing between the upper rollers (32, 34) and the periphery of the bale has been reached, the belt drive (29) is cut in again.

## Revendications

1. Procédé pour supprimer de surcharges dues à des agglomérats de produits de récolte ou analogues dans des presses (10) destinées à la production de balles cylindriques, qui comportent une chambre de formation de balles (24) s'agrandissant automatiquement lorsque l'épaisseur des balles augmente, délimitée par plusieurs courroies (26) parallèles, entraînées, sans fin et guidées sur des rouleaux (28, 30, etc.), dans lequel, lorsqu'il apparaît une surcharge, le mécanisme (29) d'entraînement des courroies est arrêté transitoirement, caractérisé en ce qu'après l'arrêt du mécanisme (29) d'entraînement des courroies, un ou plusieurs des rouleaux de support (32, 34) pour les courroies (26) sont d'abord déplacés vers l'extérieur sous l'action d'une source de force motrice (90) avec augmentation du diamètre de la chambre de formation de balles (24), par rapport à la dimension de section droite justement existante de la balle en cours de développement, puis les courroies (26) sont tendues sur la périphérie des balles et le mécanisme (29) d'entraînement des courroies est alors de nouveau remis en marche.

2. Procédé suivant la revendication 1, pour des presses de production de balles dans lesquelles les sections de courroie délimitant la chambre de formation de balles (24) sont guidées sur des côtés de l'entrée (20) de produits de récolte par deux rouleaux inférieurs (28, 30) fixes par rapport au châssis et au-dessus de la balle par deux rouleaux (32, 34) placés sur des bras de support (64) pouvant pivoter en fonction de l'augmentation de la section droite des balles, caractérisé en ce qu'après l'arrêt du mécanisme (29) d'entraînement des courroies, les bras de support (64) et les rouleaux (32, 34) placés sur eux au-dessus de la balle sont déplacés vers l'extérieur à l'écart de la périphérie de la balle au moyen de la source de force motrice (90), en ce qu'en même temps que l'augmentation de la distance entre ces rouleaux supérieurs (32, 34) et la périphérie de la balle, les courroies (26) sont tendues en permanence de façon forcée sur la périphérie de la balle, et en ce qu'une fois obtenue la distance agrandie souhaitée entre les rouleaux supérieurs (32, 34) et la périphérie de la balle, le mécanisme (29) d'entraînement des courroies est remis en marche.

FIG. 1

FIG. 2

FIG. 3

DRIVE MEANS

DRIVE MEANS

0 102 530

FIG. 4

FIG. 5

DRIVE MEANS

DRIVE MEANS

FIG. 6